Europäisches Patentamt

European Patent Office

Office européen des brevets

(11) Publication number: **0 203 289**
**A2**

# EUROPEAN PATENT APPLICATION

(21) Application number: 86103524.4

(22) Date of filing: **15.03.86**

(51) Int. Cl.4: **D06M 17/00** , C09J 5/08 , D04H 1/58 , B32B 31/06

(30) Priority: **26.04.85 JP 90167/85**

(43) Date of publication of application: **03.12.86 Bulletin 86/49**

(84) Designated Contracting States: **DE FR GB**

(71) Applicant: **NORDSON CORPORATION 555 Jackson Street P. O. Box 151 Amherst Ohio 44001(US)**

(72) Inventor: **Akasaki, Toshiro 1403 5-2-18, Mita Minato-ku Tokyo(JP)**

(74) Representative: **Eisenführ & Speiser Martinistrasse 24 D-2800 Bremen 1(DE)**

(54) **Moisture-absorbing cloth and method for its production.**

(57) The invention relates to a method of adhering a first substrate (12) to a second substrate (11) by preparing a foamable hot-melt adhesive, spraying the hot-melt adhesive in a formed state from a nozzle, whereby said foam being directed toward said first substrate, depositing that hot-melt adhesive foam on said first substrate in a spider web like configuration so as to form a spider web like film of said hot-melt adhesive foam on said first substrate, thereafter bonding said second substrate to said first substrate, and depositing an active agent (15) within the open spaces of said spider web like film prior to bonding said second substrate to said first substrate, and laminated product being composed of said first and second substrate, said hot melt adhesive foam in a spider web like configuration, and said active agent within the open spaces of said spider web like film.

FIG.3A

Moisture-Absorbing Cloth and Method for its Production

Detailed Explanation of the Invention:

The present invention pertains to a moisture-absorbing, water-absorbing, deodorizing, or fragrance-enhancing cloth and to a method for producing such cloth.

Moisture-absorbing and water-absorbing cloth have been manufactured for a long time. Recently, however, the demand for them is increasing for sanitary and deodorizing purposes. Demand will expand year by year at an increasing rate.

The structure of these cloths has remained unchanged, and they have many defects. Typical examples are described in the following paragraphs.

Example I

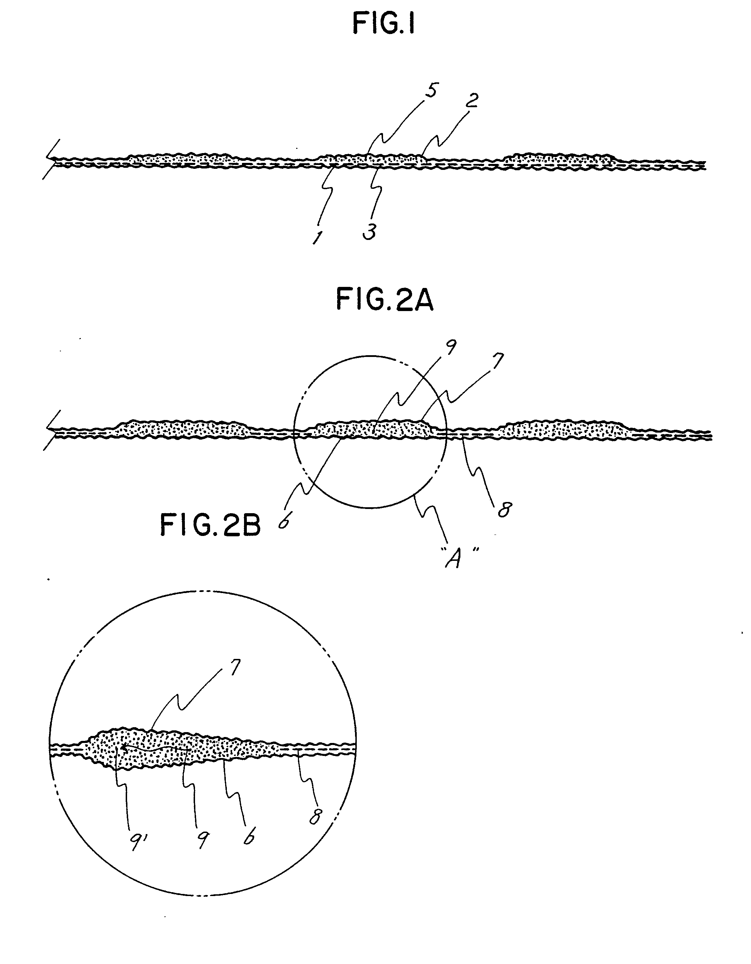

As the basic structure, two sheets of nonwoven cloth are bonded together, with the powdered moisture-absorbing, water-absorbing, deodorizing, or fragrance-enhancing agent (below the phrase "water-absorbing, deodorizing, or fragrance-enhancing agent" is omitted) sandwiched between them. Figure 1 shows a cross section. Adhesive 3 is applied in a grid-like pattern over the entire surface of nonwoven cloth 1, which forms the substrate, by means of a roll coater, extruder, sprayer, etc.

The powdered moisture-absorbing agent 5 is bonded in the desired pattern to nonwoven cloth 1. Another nonwoven cloth 2 is laid down on nonwoven cloth 1 to cover it. Nonwoven cloth 2 is bonded to nonwoven cloth 1 in the areas not occupied by the moisture-absorbing agent. In other words, nonwoven cloths 1 and 2 are bonded to each other in certain areas, and in others they sandwich the moisture-absorbing agent, which forms a thin layer, between them.

The moisture-absorbing, water-absorbing, deodorizing, and fragrance-enhancing cloths (the words "water-absorbing, deodorizing, and fragrance-enhancing" are omitted in the following) made in this way suffer from the following disadvantages. The powdered moisture-absorbing agent 5 is bonded in place by adhesive 3. Therefore, most of the surface area of the moisture-absorbing particles is covered by adhesive. As a result, the total absorbent area is reduced. Furthermore, the number of moisture-absorbing particles not covered by adhesive is small, because the layer formed by the moisture-absorbing agent is thin. As a result, the total quantity of effective moisture-absorbing agent is small, and the moisture-absorbing effect is accordingly very small.

Example 2

See Figure 2A. In Example 2, in contrast to Example 1, no powdered moisture-absorbing agent is in contact with the adhesive. Therefore, none of the surface area of the moisture-absorbing particles is covered, and as a result, all surfaces of the particles are effective in absorbing moisture.

Nevertheless, Example 2 suffers from the disadvantage that the powdered moisture-absorbing agent, which is not fixed in place, can move about freely, because it is not in contact with the adhesive. As can be seen in Figure 2B, the particles of the moisture-absorbing agent 9 in the desired pattern move freely within the scope of pattern 9' and can accumulate at one side. It is therefore impossible for the pattern to keep its original shape. As a result, the thickness of the moisture-absorbing layer becomes nonuniform. This is undesirable because it impairs the appearance and touch of the product.

The present invention is based on the task of improving the performance of the moisture-absorbing, water-absorbing, deodorizing, and fragrance-enhancing cloths in such a way that the thickness of the cloth remains uniform and its appearance and touch are improved.

The present invention has the goal of providing highly effective moisture-absorbing, water-absorbing, deodorizing, and fragrance-enhancing cloths, in which nonwoven cloth layers are bonded together without the moisture-absorbing particles sandwiched between them being covered over by adhesive.

In the present invention, a basic invention entitled "Method for Applying Hot-Melt Adhesive Foam and Products Obtained by this Method", as described in Japanese Patent Application No. S-60-6501 submitted by the present applicant Nordson K.K. is adapted to the present method of producing moisture-absorbing, water-absorbing, deodorizing, and fragrance-enhancing cloths and to the products obtained by this method. In other words, the present invention comprises the moisture-absorbing, water-absorbing, deodorizing, and fragrance-enhancing cloths which are characterized in that several layers of nonwoven cloth are bonded together by a hot-melt adhesive foam applied so as to form a spiderweb-like structure, and in that a powdered moisture-absorbing, water-absorbing, deodorizing, or fragrance-enhancing agent is scattered in the spaces between the fibers of the spiderweb structure. The invention also pertains to a method for producing the cloths described above.

The essence of the present invention is a method for applying hot-melt adhesive foam to the surface of a substrate by means of hot-air spraying and the products obtained by this method. In the conventional method, a hot-melt adhesive foam is applied to the surface of a substrate by extrusion from a nozzle. In the basic invention cited above, however, the adhesive is applied by spraying with air. When the adhesive is sprayed, it is applied in the form of a spiderweb-like structure if the viscosity of the adhesive and the temperature of the air are suitable.

The layer of bonding agent in the form of a spiderweb formed by a hot-melt adhesive foam as described above adheres very strongly to substrates, especially when their surface is rough, such as the surface of nonwoven cloth, which consists of irregular arrangements of many short fibers. The present invention is characterized in that the hot-melt adhesive foam is applied to the surface of nonwoven cloth to form a spiderweb-like structure and in that the necessary amount of particles is scattered in the spaces between the fibers of the spiderweb structure.

The hot-melt foam used in the invention is described below.

Foamable hot-melt adhesives include nonvulcanized rubber-based thermoplastic resins, saturated polyester-based thermoplastic resins, polyamide-based thermoplastic resins, EVA, and polyolefin-based thermoplastic resins. These resins can be copolymerized and modified in various ways. After the resin has been melted, $N_2$, $CO_2$ and various other gases are incorporated into the adhesive in the form of numerous air bubbles. As a result, the volume of the resin increases by a factor of 1.5 to 10.

The hot-melt adhesive foam not only retains its primary property of adhesion but also has many other advantages for the bonding process:

--a lower specific gravity, which means that the amount of bonding agent required is reduced;

--a lower apparent viscosity under high pressure in the applicator;

--less fluidity after application;

--a thinner adhesion layer and a larger adhesion area under bonding pressure;

--a shortened setting time;

--improved adhesion capacity to porous and rough surfaces;

--a reduced surface heat capacity, which prevents thermal deformation when the adhesive is applied to thin plastic films or other thin materials;

--an increase in the feasibility of low-temperature applications because of the rapid cooling of the surface;

--increased flexibility;

--improved sealability;

--softness and improved touch;

--light weight;

--increased open time during manufacturing; and

--reduced overall cost.

The structure of the moisture-absorbing cloth according to the invention is described below. There are four basic structures:

Structure 1

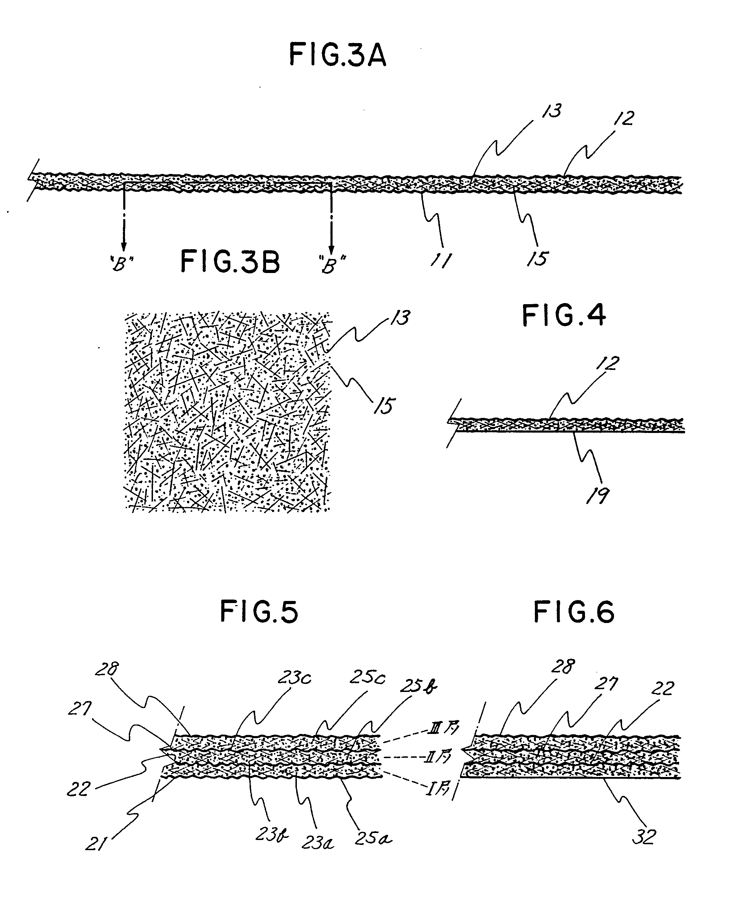

Figure 3A shows a cross section of this structure, and Figure 3B shows a transverse section. Two sheets of nonwoven cloth *11,12* are bonded together by means of a bonding agent which assumes the form of a spiderweb-like structure. The hygroscopic agent particles *15* are scattered in the spaces between the fibers of the spiderweb structure. When the fibers of the spiderweb structure formed by the bonding agent are widely spaced and the quantity of the hygroscopic agent is comparatively large, the moisture-absorbing capacity of the cloth is high, but the adhesion between the layers of nonwoven cloth of the moisture-absorbing system is weak. Conversley, when the fibers of the spiderweb structure are densely packed and the quantity of hygroscopic agent particles is comparatively small, the moisture-absorbing capacity of the moisture-absorbing cloth is low, but the adhesion between the layers of nonwoven cloth is strong.

In the latter case, if the quantity of hygroscopic agent is increased, the surfaces of the fibers of the spiderweb structure become covered by the hygroscopic agent, which decreases the adhesive power of the bonding agent. Therefore, the ratio between the amount of bonding agent to that of hygroscopic agent must be adapted to the use, to the grade of moisture-absorbing cloth, to the quality of the nonwoven cloth, and to the type of hot-melt adhesive foam. The optimum ratio must be selected in consideration of all these factors.

As shown in Figure 4, one of the two sheets of nonwoven cloth can be replaced by a layer of woven cloth or by a sheet of plastic 19.

## Structure 2

See Figure 5. In structure 2, three or more layers of nonwoven cloth 21,22,27,28 are bonded together by means of the spiderweb-like bonding agent structures 23a, 23b, 23c, which are obtained by spraying hot-melt adhesive foam onto the cloth; hygroscopic agent particles 25a, 25b, 25c, are scattered in the spaces between the fibers of the spiderweb structure. In short, several layers of moisture-absorbing cloth such as those obtained in producing structure 1 are stacked to form multiple layers —Layer I, Layer II, and Layer III. The larger the stack of layers, the greater is the quantity of hygroscopic agent and the thicker is the overall structure. In structure 2, furthermore, one of the three or more layers of nonwoven cloth or only the outside layer can be replaced by a layer of woven cloth or by a sheet of plastic 32 as shown in Figure 6.

## Structure 3

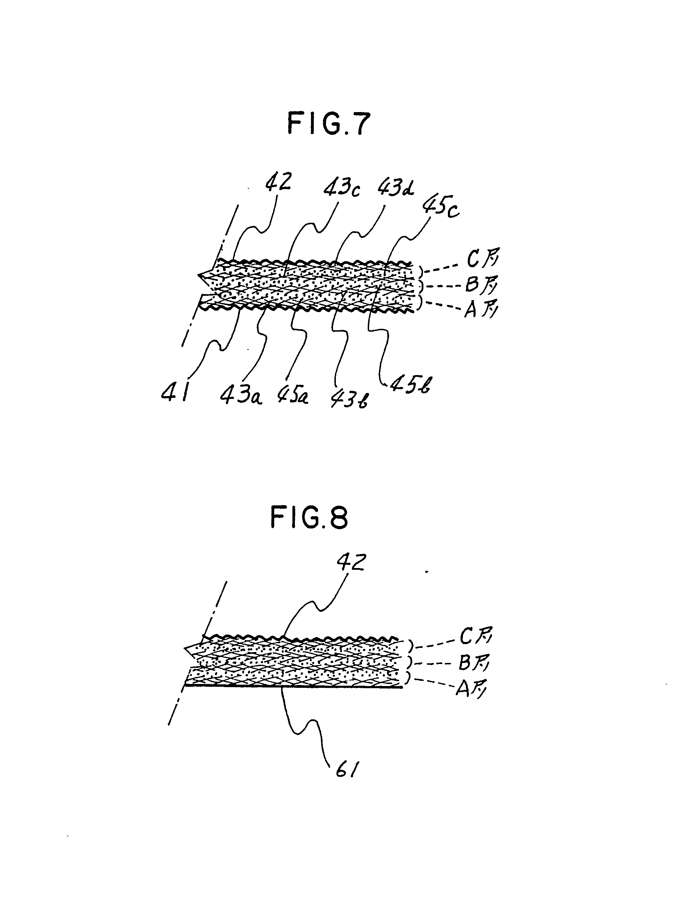

See Figure 7. Between the two layers of nonwoven cloth 41, 42, several layers of bonding agent 43a, 43b, 43c consisting of hot-melt adhesive foam are stacked in the form of spiderweb-like structures. The hygroscopic agent particles 45a, 45b, 45c are scattered in the spaces between the fibers of the spiderweb structures of Layers A, B, and C and between these layers. This structure is characterized in that the spiderweb-like structures formed by the bonding agent in these layers adhere strongly to each other. As in the case of structure 2, the quantity of hygroscopic agent again increases with the number of layers. In structure 3, however, the increase in the thickness of the overall structure is not as great as in the case of structure 2. The reason for this is that there are not as many layers of nonwoven cloth in structure 3 as in structure 2.

In structure 3, furthermore, one of the two layers of nonwoven cloth can again be replaced by a layer of woven cloth or by a sheet of plastic 67 as shown in Figure 8.

## Structure 4

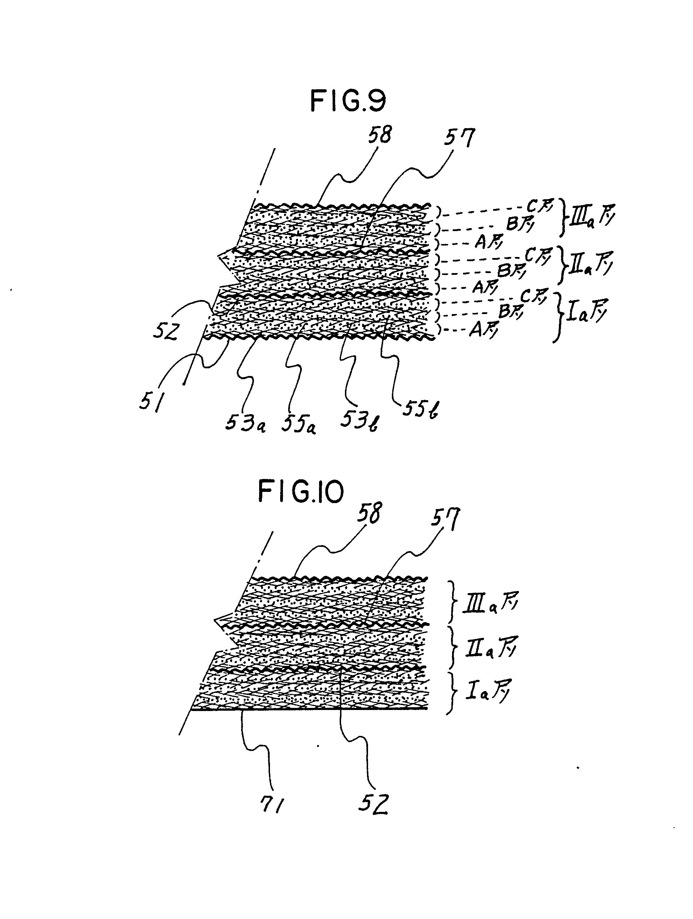

See Figure 9. In structure 4, several layers of the above-mentioned structure 3 are stacked. In other words, Layer IIa, which represents structure 3, is stacked on top of Layer Ia, which also represents structure 3. If desired, Layer IIIa can be stacked on top of Layer IIa. In this case, however, only one sheet of nonwoven cloth is sandwiched between these layers.

As shown in Figure 10, one of these several sheets of nonwoven cloth or only the outside layer can be replaced by a layer of woven cloth or by a sheet of plastic 71.

The method for producing the cloth according to the invention is described below. Before the explanation of the method is presented, however, it is necessary to provide a brief outline of Japanese Patent Application No. S-60-6501 of the present applicant entitled "Method for Applying Hot-Melt adhesive Foam and Products Obtained by this Method", which is the basis of the present invention. First, the hot-melt adhesive is heated and melted in the hot-melt applicator. Gas is mixed into the hot-melt adhesive, and pressure is applied to it. The pressurized adhesive passes through a pressure-resistant an heat-resistant hose and is sprayed out through the nozzle of an extruder. The temperature of the air varies widely depending on the type of hot-melt adhesive and can range between 100 and 500°C.

The way in which the basic invention works is described below. As already mentioned, the hot-melt adhesive foam is a thermoplastic resin of comparatively high viscosity, which has been heated and melted, and into which air or other gas has been incorporated under pressure. When the thermoplastic resin is released into the atmosphere through the nozzle, it foams and is then atomized by an air sprayer. On expansion, the pressure drops immediately from about 800 psi (56 kg/cm²) to atmospheric pressure. At the same time, the very small bubbles of compressed gas swell up to about 50 times their original size; in other words, a foam is created almost explosively. The thin film produced as a result is not in the form of the large, aggregated particles which are characteristic of conventional hot-melt adhesives; on the contrary, the film is built up of very small, atomized particles produced by the hot air ejected from the nozzle.

Many of the hot-melt adhesives consist of polymer substances and are based on synthetic resins. They are highly adhesive. Therefore, when they are scattered by the spray process, the very tiny particles tend to string together. These strings of very small particles then form a spiderweb-like structure.

This spiderweb-like structure can form a comparatively uniform film on the surface of uneven fibers, especially on glass wool. This is a great advantage of hot-melt adhesive foam. Therefore, the hot-melt adhesive foam can be considered the most suitable agent for bonding aluminum leaf or foil to glass wool mats, for bonding nonwoven cloth layers to each other, and for bonding woven cloth, plastic sheets, etc.

The production method according to the invention is explained below on the basis of the above-mentioned basic invention entitled "Method for Applying Hot-Melt Adhesive Foam and Products Obtained by this Method".

There are four different methods used, one for each of the four different types of moisture-absorbing cloth described above.

Method 1

This is a method for producing the moisture-absorbing cloth with structure 1 (see Figures 3A, 3B, and 4). First, hot-melt foam is sprayed to form a spiderweb-like structure on one side of a layer of nonwoven cloth 11 (81) (Figure 12). Then, a suitable amount of powdered hygroscopic agent is scattered in the spaces between the firers of the spiderweb-like hot melt adhesive structure (referred to in the following as "spiderweb-like adhesive structure") (Figure 13), but not so that the surface of the spiderweb fibers are covered by the powdered hygroscopic agent particles (referred to below simply as "particles"). Then more hot-melt adhesive foam is applied as described in the first process above to form another layer of the spiderweb-like structure (Figure 14). Finally, a second layer of nonwoven cloth is laid down onto nonwoven cloth 81 , and the two layers of nonwoven cloth are bonded together by the application of external pressure at ordinary temperature, or by the application of pressure and heat, if desired. There are many methods which can be used to apply pressure and heat. The simplest continuous method is shown in Figure 15. In this simple method, the nonwoven cloth substrate 81, on which are located the spiderweb-like structures 83 in which the particles 85 have been scattered, and the other layer of nonwoven cloth 82 are joined at a pair of heated pinch rolls 87, 88 , which heat and press the two layers of nonwoven cloth simultaneously.

Method 2

This is a method for producing the moisture-absorbing cloth with structure 2 explained above - (see Figures 5 and 6). Structure 2 is obtained by stacking several layers of structure 1. Since method 2 consists merely in a repetition of method 1, a detailed explanation can be omitted. Nevertheless, it should be pointed out that the heating and pressing step should not be carried out for each new layer, but rather all at once after all the layers have been stacked. This is so that thermal energy and labor can be minimized.

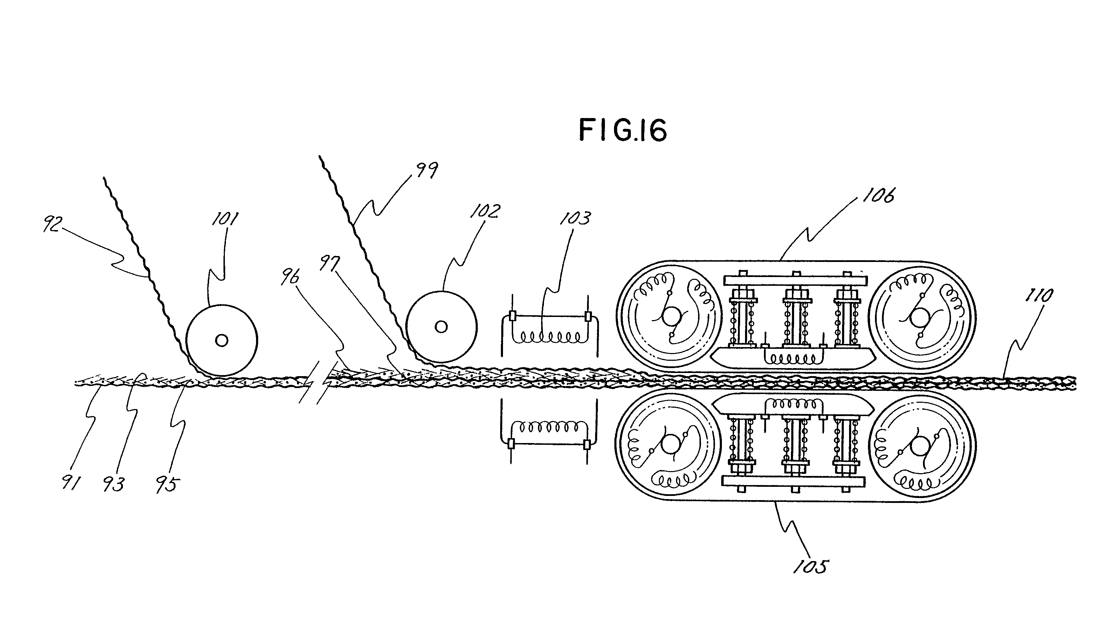

When the layers are thick, more time will be required. In this case, it is desirable to use an endless steel belt system as shown in Figure 16.

Method 3

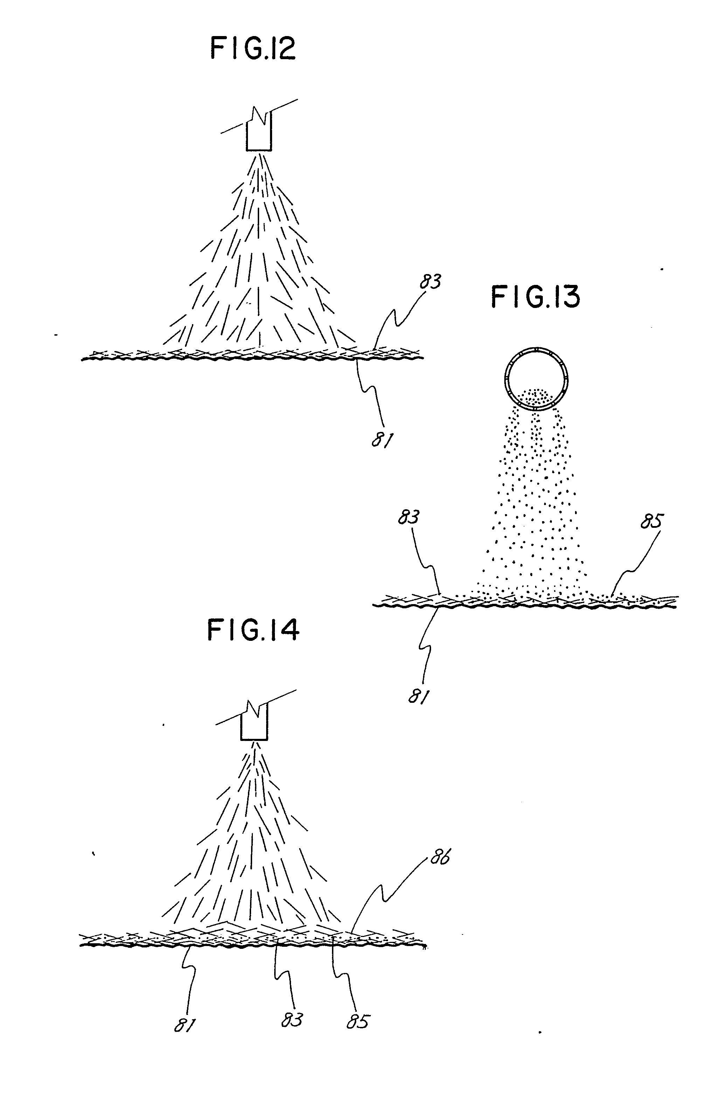

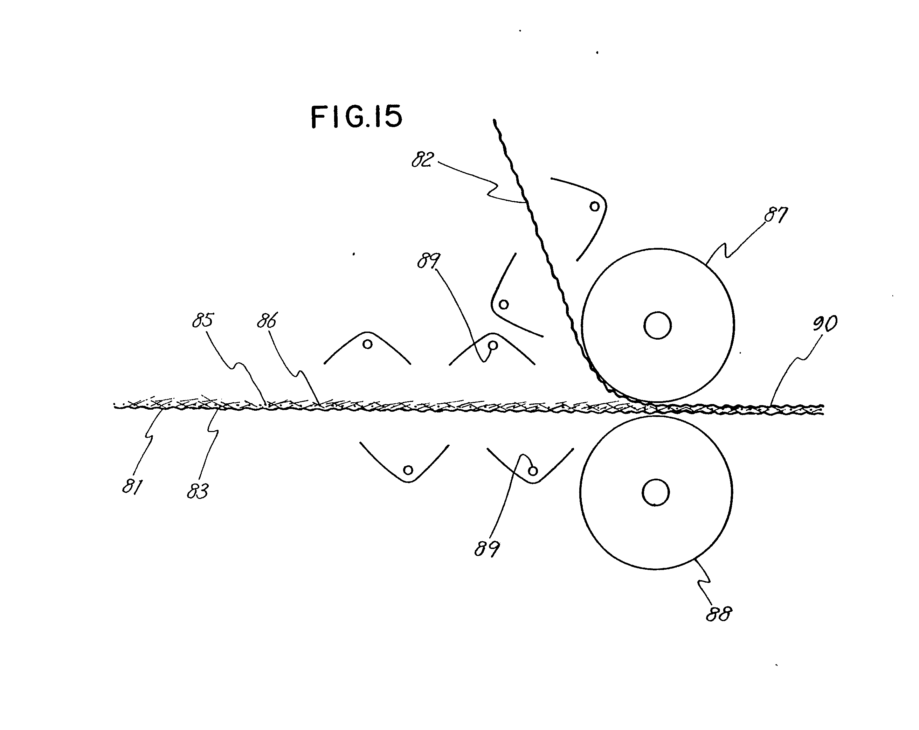

This is a method for producing the moisture-absorbing cloth with structure 3 (see Figure 7). First, the hot-melt adhesive foam is sprayed to form a spiderweb-like structure 43a (83) on one side of nonwoven cloth substrate 41 (81) as shown in Figure 12. Then a suitable amount of hygroscopic agent particles 45a (85) is uniformly scattered in the spaces between the fibers of the spiderweb-like hot-melt adhesive structure as shown in Figure 13. More hot-melt adhesive foam is then sprayed to form another spiderweb-like structure 43b (86) as shown in Figure 14. Up to this point, method 3 is the same as method 1. In method 3, however, more particles 45b are now scattered in the spaces between the fibers 43b of the spiderweb structure, whereas in method 1, another layer of nonwoven cloth is laid down on top of the second spiderweb layer. In method 3, the application of adhesive to form the spiderweb structures and the scattering of the particles are repeated several times to form layers A, B, C. Finally, another layer of cloth 42 is laid down on the stack after a final spiderweb structure has been applied so that the final product can be obtained by heating and pressing the entire composite. The methods used for heating and pressing in method 3 are the same as those used in methods 1 and 2.

One of the two layers of nonwoven cloth can be replaced by a layer of woven cloth or by a sheet of plastic 61 as shown in Figure 8.

Method 4

This is a method for producing the moisture-absorbing cloth with structure 4 (see Figure 9). Structure 4 is constructed by stacking layers of structure 3. Since method 4 consists merely in a repetition of method 3, a detailed explanation can be omitted. Nevertheless, it should be pointed out that the process of heating and applying pressure should not be done each time a layer is added, but rather all at once after all the layers have been stacked. This is to conserve thermal energy and labor.

One of the two layers of nonwoven cloth, i.e., the one at the top or the one at the bottom, can be replaced by a sheet of plastic 71 (Figure 10).

The hygroscopic agent used to produce the moisture-absorbing cloth can be a drying agent such as silica gel, aluminum or calcium chloride, etc. The particles of these agents should be comparatively small, however.

The moisture-absorbing cloth of the invention can be used for bed sheets, in underware by combining it with other material, for perspiration-absorbing sheets and other products in sheet form, as linings for hats, as insoles for shoes, and for many other purposes as well.

Although the description given above pertains to products in which hygroscopic agents have been incorporated, a water-absorbing agent (FG 801 S-N from Nittetsu Kogaku) can also be used to make water-absorbing cloth. A "water-absorbing cloth" literally means a cloth capable of absorbing liquids, and such cloths are being used to an increasing extent in products such as disposable diapers and sanitary articles.

In addition, it is also possible to produce a deodorizing cloth by incorporating a deodorizing agent such as activated charcoal. It is also possible to produce a fragrance-enhancing cloth by incorporating a fragrance. In these cases, it will be possible to make a variety of products by combining various such agents between the layers of nonwoven cloth.

The moisture-absorbing, water-absorbing, deodorizing, and fragrance-enhancing cloth according to the invention makes maximum use of the absorbent areas of all particles of the moisture-absorbing, water-absorbing, deodorizing, or fragrance-enhancing agent, etc., which are present in these products, because the absorption areas are kept unobstructed. The absorbing and scenting effects as well as the external appearance of such cloth products are also improved by the invention. In addition, the present invention makes it possible to produce these types of cloth more efficiently and at less cost.

Simple Explanation of the Figures

Figure 1 is a cross section through Example 1 showing the conventional type of moisture-absorbing, water-absorbing, deodorizing, and fragrance-enhancing cloth (referred to below simply as "moisture-absorbing cloth").

Figure 2A shows a cross section of Example 2.

Figure 2B, showing section "A", is an enlarged view of the cross section of Figure 2A.

Figure 3A is a cross section of structure 1, showing the moisture-absorbing cloth according to the invention ("according to the invention" is omitted in the following).

Figure 3B is a transverse section along line B-B of Figure 3A.

Figure 4 is a cross section of another example of structure 1.

Figure 5 is a cross section of structure 2, showing a moisture-absorbing cloth.

Figure 6 is a cross section of another example of structure 2.

Figure 7 is a cross section of structure 3, showing a moisture-absorbing cloth.

Figure 8 is a cross section of another example of structure 3.

Figure 9 is a cross section of structure 4, showing a moisture-absorbing cloth.

Figure 10 is a cross section of another example of structure 4.

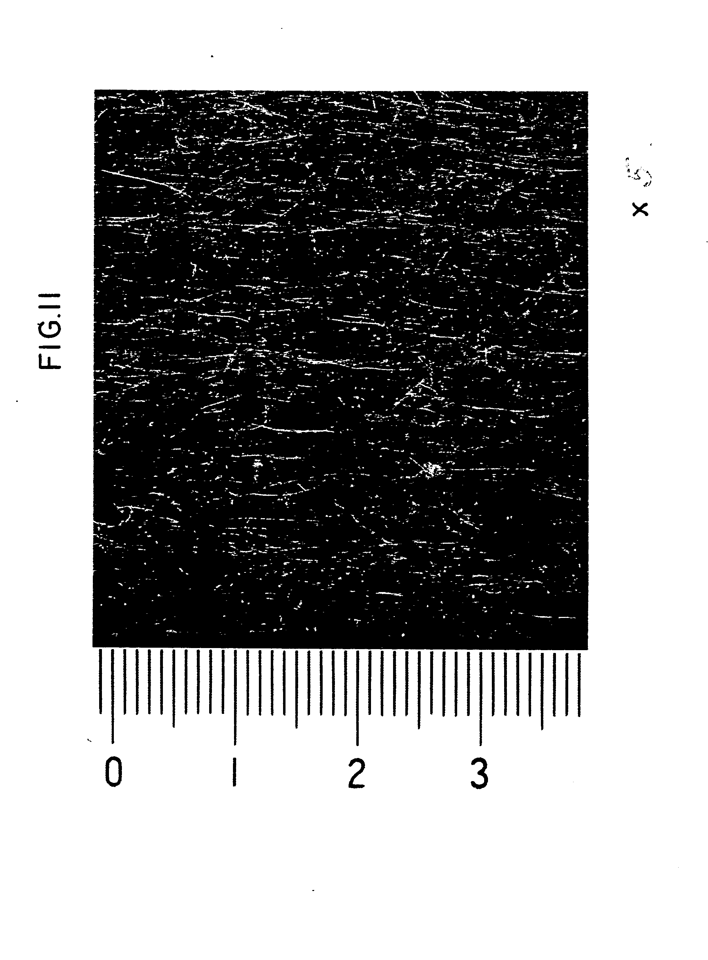

Figure 11 is a photograph from above showing the spiderweb-like structure obtained by spraying a hot-melt adhesive foam as described in Japanese Patent Application No. 60-6501 of the present applicant.

Figures 12-15 are side views of a process for producing the moisture-absorbing cloth.

Figure 16 is a side view of a system for the final processes of heating and pressing the moisture-absorbing cloth.

List of Major Reference Numbers

*1, 6, 11, 21, 41, 51, 81, 91,* nonwoven cloth - (substrate); *2, 7, 12, 22, 28, 42, 52, 57, 58, 82, 92, 99,* nonwoven cloth (stacked); *3, 8,* adhesive; *5, 9, 15, 25a, 45a, 55a, 85, 95, 96,* moisture-absorbing, water-absorbing, or deodorizing agent; *13, 14, 23a, 43a, 53a, 83, 86, 93, 96,* spiderweb-like adhesive structures.

**Claims**

(1) A method of adhering a first substrate to a second substrate, said method comprising the steps of

preparing a foamable hot-melt adhesive,

spraying the hot-melt adhesive in a formed state from a nozzle, said foam being directed toward said first substrate,

depositing that hot-melt adhesive foam on said first substrate in a spider web like configuration so as to form a spider web like film of said hot-melt adhesive foam on said first substrate,

thereafter bonding said second substrate to said first substrate, and

depositing an active agent within the open spaces of said spider web like film prior to bonding said second substrate to said first substrate.

(2) A method as set forth in Claim 1, said active agent being selected from the group consisting of a hygroscopic agent, a deodorizing agent, and a fragrance enhancing agent.

(3) A method as set forth in Claim 1, said active agent being in particle form when deposited within the open spaces of said spider web like configured film.

(4) A laminated product comprising

a first substrate,

a hot melt adhesive foam applied to a surface of said substrate, said film having a spider web like configuration when initially applied to said surface, the spider web like film thereby defining open spaces that cooperate to provide an open mesh adhesive foam on said surface,

an active agent deposited within the open spaces defined by the open mesh of said spider like configured film of hot melt adhesive foam, and

a second substrate bonded to said first substrate through use of said open mesh adhesive foam.

(5) A product as set forth in Claim 4, said active agent being selected from the group consisting of a hygroscopic agent, a deodorizing agent, and a fragrance enhancing agent.

# FIG.1

# FIG.2A

# FIG.2B

# FIG.3A

13
12
11
15

"B"  # FIG.3B  "B"

13
15

# FIG.4

12
19

# FIG.5

28
27
22
21
23c
25c
25b
III B
II B
I B
23b  23a  25a

# FIG.6

28
27
22
32

# FIG.7

42  43c  43d  45c

C $F_1$
B $F_1$
A $F_1$

41  43a  45a  43b  45b

# FIG.8

42

C $F_1$
B $F_1$
A $F_1$

61

## FIG.9

## FIG.10

FIG.11

FIG.12

83

81

FIG.13

83    85

81

FIG.14

86

81    83    85

FIG.15

# FIG.16

0 203 289